# FASCICULE DE BREVET EUROPEEN

(11) **EP 2 885 511 B1**
(45) Date de publication et mention de la délivrance du brevet: **05.04.2017**
(21) Numéro de dépôt: 13758932.1
(22) Date de dépôt: 05.08.2013
(51) Int. Cl.: F01D 25/00, B08B 9/00, F02C 7/30, H05H 1/00

(54) **OUTILLAGE ET PROCÉDÉ POUR LE DESSABLAGE D'UNE TURBOMACHINE**
WERKZEUG UND VERFAHREN ZUM ENTSANDEN EINER TURBOMASCHINE
TOOL AND METHOD FOR DESANDING A TURBOMACHINE

(30) Priorité: 14.08.2012 FR 1257808
(43) Date de publication de la demande: 24.06.2015
(73) Titulaire: SNECMA, 75015 Paris (FR)
(72) Inventeur: DERRIEN, Gérard, F-77550 Moissy Cramayel Cedex (FR); WILK, Sébastien, F-77550 Moissy Cramayel Cedex (FR)
(74) Mandataire: Robert, Mathias
(86) Numéro de dépôt international: PCT/FR2013/051884
(87) Numéro de publication internationale: WO 2014/027157

(56) Documents cités:
- EP-A1- 1 570 921
- US-A1- 2005 035 096
- US-A1- 2011 220 143

## Description

La présente invention concerne un outillage pour le dessablage d'une turbomachine, telle qu'un turboréacteur d'avion.

Lors de son fonctionnement dans certaines zones géographiques, une turbomachine peut absorber une certaine quantité de sable qui est mélangé à des résidus générés par une combustion imparfaite de kérosène dans la chambre de combustion. Ce mélange peut ensuite se coller sur des parois internes de la turbomachine, en aval de la chambre de combustion. La couche ainsi formée sur lesdites parois est constituée à la fois de fines particules de sable et d'un agglomérat de sable pollué compacté. La présence de cette couche rend difficile, voire impossible, le contrôle visuel de certaines parties de la turbomachine lors d'opérations de maintenance, en particulier des turbines basse pression et haute pression. Il existe également un risque que ces particules dégradent certains paliers de la turbomachine.

L'accès à l'espace interne de la turbomachine est restreint et rend difficile le nettoyage des parois concernées, ce qui oblige à réaliser un démontage long et coûteux des différentes parties de la turbomachine afin de pouvoir les nettoyer.

Une autre solution consiste à protéger certaines parties de la turbomachine, telles que des paliers, puis de souffler de l'air comprimé dans l'enceinte de la turbomachine afin de décoller les particules des parois internes à nettoyer. Cette méthode de nettoyage est peu précise et peut polluer d'autres parties de la turbomachine lors du soufflage.

Le document US2005/0035096 divulgue un outillage pour le dessablage d'une turbomachine, telle qu'un turboréacteur d'avion, comportant un dispositif de visualisation par endoscopie comportant des moyens de visualisation et un conduit dans lequel sont montés des moyens de guidage de lumière et de transmission d'image, un dispositif d'aspiration comportant des moyens d'aspiration reliés à un conduit d'aspiration, et un dispositif de génération d'un rayon laser, ainsi qu'un procédé de dessablage associé.

L'invention a notamment pour but d'apporter une solution simple, efficace et économique au problème précité.

L'invention est définie par les revendications adjointes.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue schématique représentant l'utilisation d'un premier ensemble de l'outillage selon une première forme de réalisation de l'invention,
- la figure 2 est une vue schématique représentant l'utilisation d'un second ensemble de l'outillage selon la première forme de réalisation de l'invention,
- la figure 3 est une vue schématique représentant l'utilisation d'un l'outillage selon une seconde forme de réalisation de l'invention.

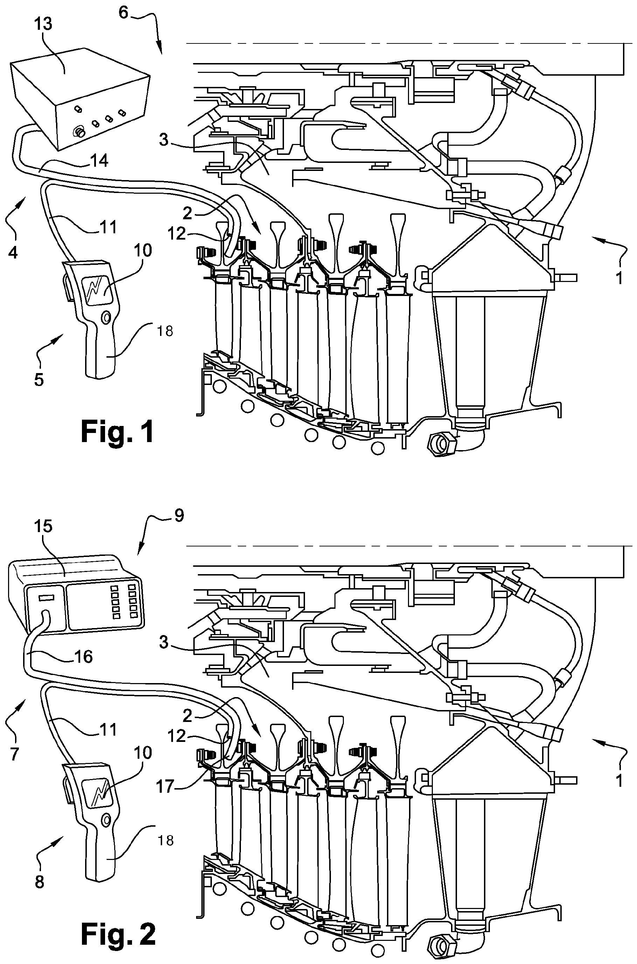

Les figures 1 et 2 représentent un procédé de dessablage d'une partie interne d'un module 1 de turboréacteur, réalisé lors d'une opération de maintenance, à l'aide d'un outillage selon une première forme de réalisation de l'invention. Le module 1 est par exemple constitué d'une partie de la turbine haute pression. Ce module 1 a été démonté du reste du turboréacteur lors de l'opération de maintenance.

Comme indiqué précédemment, un tel dessablage vise à retirer la couche de particules accrochées ou collées aux parois internes de ce module 1, difficilement accessibles pour un opérateur. En particulier, il est nécessaire de pouvoir accéder aux cavités 2 situées entre les disques de la turbine et/ou à d'autres cavités 3 du module 1. Un tel nettoyage, s'il est efficace, permet de procéder à des contrôles visuels des différentes parties du module 1, sans avoir à le démonter en sous-modules.

A cet effet, l'outillage comporte un premier ensemble 4 formé d'un premier dispositif de visualisation par endoscopie 5 couplé à un dispositif de génération d'un jet plasma 6, et un second ensemble 7 formé d'un second dispositif de visualisation par endoscopie 8 couplé à un dispositif d'aspiration 9.

Chaque dispositif de visualisation 5, 8 comporte des moyens de visualisation 18 comprenant par exemple un écran 10, et un conduit 11 dans lequel sont montés des moyens de guidage de lumière et de transmission d'image. Ainsi, l'image d'une paroi ou d'une partie interne du module 1, située en regard de l'extrémité libre 12 du conduit 11, peut être affichée sur l'écran 10 afin d'être visible depuis l'extérieur par un opérateur. Le conduit 11 est flexible, tout en ayant une certaine rigidité, de façon à pouvoir être inséré facilement dans le module 1.

Le dispositif de génération d'un jet plasma 6 comporte une torche plasma à froid, reliée à des moyens d'alimentation en gaz et à des moyens d'alimentation électrique 13 aptes à alimenter ladite torche plasma, par l'intermédiaire de lignes d'alimentation correspondantes 14. Ces dernières peuvent par exemple être montées dans une gaine entourant à la fois le conduit 11 du premier dispositif de visualisation 5 et lesdites lignes 14. La torche est fixée au conduit 11 du premier dispositif de visualisation 5.

Une torche plasma à froid est notamment connue du document US 2011/0220143.

Le dispositif d'aspiration 9 comporte des moyens d'aspiration 15 reliés à un conduit d'aspiration 16 fixé au conduit 11 du second dispositif de visualisation 8. Les deux conduits 11, 16 peuvent être entourés d'une gaine commune.

Afin de réaliser le nettoyage des parois des cavités internes 2, 3 du module 1, l'opérateur insère tout d'abord simultanément la torche plasma et le conduit 11 des premiers moyens de visualisation 5 dans la turbomachine, de façon à ce que la torche et l'extrémité libre 12 du conduit 11 soient situées en regard d'une surface à nettoyer.

L'opérateur décolle ensuite la couche de particules présente sur la surface précitée, à l'aide de la torche plasma, puis extrait la torche plasma et le conduit 11 du module 1.

L'opérateur insère ensuite simultanément le conduit d'aspiration 16 et le conduit 11 des seconds moyens de visualisation 8 dans le module 1, de façon à ce que les extrémités libres 12, 17 desdits conduits 11, 16 soient situées au niveau de ladite surface, puis procède à l'aspiration des particules décollées précédemment, à l'aide du conduit d'aspiration 16. L'opérateur extrait enfin les conduits 11, 16 du module 1.

On constate que l'outillage selon l'invention permet de retirer rapidement et aisément la couche de particules, sans nécessiter le démontage du module 1. Un tel nettoyage ne nécessite pas non plus de protéger certaines parties du module 1, telle que des paliers. Enfin, ce nettoyage ne risque pas de polluer d'autres parties du module 1 ou du turboréacteur.

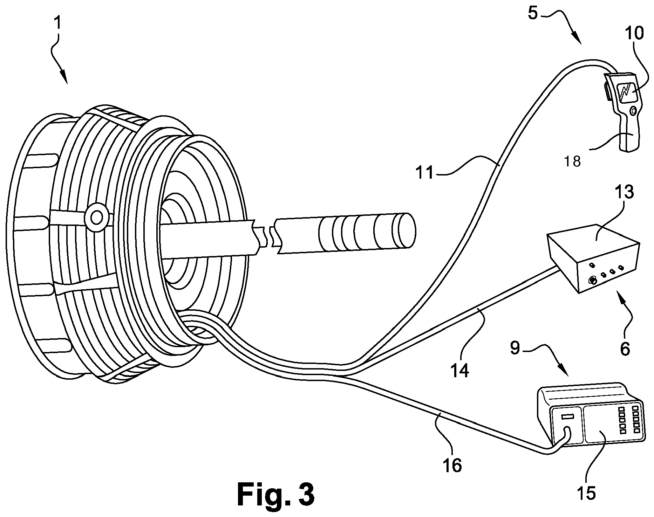

La figure 3 illustre un outillage selon une seconde forme de réalisation, dans lequel le dispositif d'aspiration 9 et le dispositif de génération d'un jet plasma 6 sont couplés à un seul dispositif de visualisation par endoscopie 5 de façon à former un seul et même ensemble.

Dans ce cas, la torche est fixée au conduit 11 du dispositif de visualisation 5, pouvant être fixée aussi au conduit d'aspiration 16. Ces conduits 11, 16 et les lignes d'alimentation 14 de la torche plasma peuvent être entourés d'une gaine commune.

Dans ce cas, le procédé de dessablage est plus simple puisqu'il consiste à :
- insérer simultanément la torche plasma, le conduit 16 du dispositif d'aspiration 9 et le conduit 11 des moyens de visualisation 5 dans le module 1, de façon à ce que la torche plasma et les extrémités libres 12, 17 desdits conduits 11, 16 soient situées en regard d'une surface à nettoyer,
- décoller la couche de particules de ladite surface, à l'aide de la torche plasma,
- aspirer les particules décollées précédemment, à l'aide du conduit d'aspiration 16,
- retirer simultanément la torche plasma, le conduit 16 du dispositif d'aspiration 9 et le conduit 11 du dispositif de visualisation 5 hors du module 1.

## Revendications

1. Outillage pour le dessablage d'une turbomachine, telle qu'un turboréacteur d'avion, comportant un seul dispositif de visualisation par endoscopie (5) comportant des moyens de visualisation (10) et un conduit (11) dans lequel sont montés des moyens de guidage de lumière et de transmission d'image, un dispositif d'aspiration (9) comportant des moyens d'aspiration (15) reliés à un conduit d'aspiration (16) fixé au conduit (11) du dispositif de visualisation précité (5), et un dispositif de génération d'un jet plasma (6) comportant une torche plasma reliée à des moyens d'alimentation en gaz et à des moyens d'alimentation électrique (13) aptes à alimenter ladite torche plasma, ladite torche plasma étant fixée au conduit (11) du dispositif de visualisation précité (5).

2. Outillage selon la revendication 1, **caractérisé en ce que** le dispositif d'aspiration (9) et le dispositif de génération d'un jet plasma (6) sont couplés au seul dispositif de visualisation (5) de façon à former un même ensemble.

3. Procédé de dessablage d'une turbomachine à l'aide d'un outillage selon la revendication 2, **caractérisé en ce qu'**il comporte les étapes consistant à :
- insérer simultanément la torche plasma, le conduit (16) du dispositif d'aspiration (9) et le conduit (11) du dispositif de visualisation (5) dans la turbomachine, de façon à ce que la torche et des extrémités libres (17, 12) desdits conduits (16, 11) soient situées en regard d'une surface à nettoyer,
- décoller une couche de particules, telle par exemple qu'une couche de sable, de la surface à nettoyer, à l'aide de la torche plasma,
- aspirer les particules décollées précédemment, à l'aide du conduit d'aspiration (16).

4. Outillage pour le dessablage d'une turbomachine, telle qu'un turboréacteur d'avion, comportant plusieurs dispositifs de visualisation par endoscopie (5, 8), chacun comportant des moyens de visualisation (10) et un conduit (11) dans lequel sont montés des moyens de guidage de lumière et de transmission d'image, un dispositif d'aspiration (9) comportant des moyens d'aspiration (15) reliés à un conduit d'aspiration (16) fixé au conduit (11) d'un second (8) des plusieurs dispositifs de visualisation précités (5, 8), et un dispositif de génération d'un jet plasma (6) comportant une torche plasma reliée à des moyens d'alimentation en gaz et à des moyens d'alimentation électrique (13) aptes à alimenter ladite torche plasma, ladite torche plasma étant fixée au conduit (11) d'un premier (5) des plusieurs dispositifs de visualisation précités (5,8).

5. Outillage selon la revendication 4, **caractérisé en ce qu'**il comporte un premier ensemble (4) formé du premier dispositif de visualisation (5) couplé à un dispositif de génération d'un jet plasma (6), et un second ensemble (7) formé du second dispositif de visualisation (8) couplé à un dispositif d'aspiration (9).

6. Procédé de dessablage d'une turbomachine à l'aide d'un outillage selon la revendication 5, **caractérisé en ce qu'**il comporte les étapes consistant à :
- insérer simultanément la torche plasma et le conduit (11) du premier dispositif de visualisation (5) dans la turbomachine, de façon à ce que la torche et une extrémité libre (12) dudit conduit (11) soient situées en regard d'une surface à nettoyer,
- décoller une couche de particules, telle par exemple qu'une couche de sable, de la surface à nettoyer, à l'aide de la torche plasma, - insérer simultanément le conduit d'aspiration (16) et le conduit (11) du second dispositif de visualisation (8) dans la turbomachine, de façon à ce que des extrémités (17, 12) desdits conduits (16, 11) soient situées au niveau de la surface à nettoyer,
- aspirer les particules décollées précédemment, à l'aide du conduit d'aspiration (16).

7. Outillage selon l'une des revendications 1, 2, 4 ou 5, **caractérisé en ce que** la torche plasma est une torche plasma à froid.

## Patentansprüche

1. Werkzeug zum Entsanden einer Turbomaschine bzw. eines Turbotriebwerks, wie etwa eines Turbostrahltriebwerks für Flugzeuge, enthaltend eine einzige Anzeigevorrichtung (5) zum Anzeigen mittels Endoskopie mit Anzeigemitteln (10) und einer Leitung (11), in welcher Lichtleit- und Bildübertragungsmittel gelagert sind, eine Saugvorrichtung (9) mit Saugmitteln (15), die mit einer Saugleitung (16) verbunden sind, welche an die Leitung (11) der vorgenannten Anzeigevorrichtung (5) befestigt ist, und eine Vorrichtung zum Erzeugen eines Plasmastrahls (6) mit einem Plasmabrenner, der mit Gasversorgungsmitteln und Stromversorgungsmitteln (13) verbunden ist, welche dazu geeignet sind, den Plasmabrenner zu versorgen, wobei der Plasmabrenner an die Leitung (11) der vorgenannten Anzeigevorrichtung (5) befestigt ist.

2. Werkzeug nach Anspruch 1, **dadurch gekennzeichnet, dass** die Saugvorrichtung (9) und die Vorrichtung zum Erzeugen eines Plasmastrahls (6) mit der einzigen Anzeigevorrichtung (5) so gekoppelt sind, dass sie ein und dieselbe Baugruppe bilden.

3. Verfahren zum Entsanden einer Turbomaschine bzw. eines Turbotriebwerks mit Hilfe eines Werkzeugs nach Anspruch 2, **dadurch gekennzeichnet, dass** es nachfolgende Schritte umfasst:
- gleichzeitiges Einsetzen des Plasmabrenners, der Leitung (16) der Saugvorrichtung (9) und der Leitung (11) der Anzeigevorrichtung (5) in die Turbomaschine bzw. in das Turbotriebwerk derart, dass der Brenner und die freien Enden (17, 12) der Leitungen (16, 11) einer zu reinigenden Fläche gegenüberliegen,
- Ablösen einer Partikelschicht, wie etwa einer Sandschicht, von der zu reinigenden Fläche mit Hilfe des Plasmabrenners,
- Absaugen der zuvor abgelösten Partikel mit Hilfe der Saugleitung (16).

4. Werkzeug zum Entsanden einer Turbomaschine bzw. eines Turbotriebwerks, wie etwa eines Turbostrahltriebwerks für Flugzeuge, enthaltend mehrere Anzeigevorrichtungen (5, 8) zum Anzeigen mittels Endoskopie, die jeweils Anzeigemittel (10) und eine Leitung (11) enthalten, in welcher Lichtleit- und Bildübertragungsmittel gelagert sind, eine Saugvorrichtung (9) mit Saugmitteln (15), die mit einer Saugleitung (16) verbunden sind, welche an die Leitung (11) einer zweiten (8) der mehreren Anzeigevorrichtungen (5, 8) befestigt ist, und eine Vorrichtung zum Erzeugen eines Plasmastrahls (6) mit einem Plasmabrenner, der mit Gasversorgungsmitteln und mit Stromversorgungsmitteln (13) verbunden ist, welche dazu geeignet sind, den Plasmabrenner zu versorgen, wobei der Plasmabrenner an die Leitung (11) einer ersten (5) der mehreren Anzeigevorrichtungen (5, 8) befestigt ist.

5. Werkzeug nach Anspruch 4, **dadurch gekennzeichnet, dass** es eine erste Baugruppe (4) enthält, die aus der ersten Anzeigevorrichtung (5) gebildet ist, welche mit einer Vorrichtung zum Erzeugen eines Plasmastrahls (6) gekoppelt ist, sowie eine zweite Baugruppe (7), die aus der zweiten Anzeigevorrichtung (8) gebildet ist, welche mit einer Saugvorrichtung (9) gekoppelt ist.

6. Verfahren zum Entsanden einer Turbomaschine bzw. eines Turbotriebwerks mit Hilfe eines Werkzeugs nach Anspruch 5, **dadurch gekennzeichnet, dass** es nachfolgende Schritte umfasst:
- gleichzeitiges Einsetzen des Plasmabrenners und der Leitung (11) der ersten Anzeigevorrichtung (5) in die Turbomaschine bzw. in das Turbotriebwerk derart, dass der Brenner und ein freies Ende (12) der Leitung (11) einer zu reinigenden Fläche gegenüberliegen,
- Ablösen einer Partikelschicht, wie etwa einer Sandschicht, von der zu reinigenden Fläche mit Hilfe des Plasmabrenners,
- gleichzeitiges Einsetzen der Saugleitung (16) und der Leitung (11) der zweiten Anzeigevorrichtung (8) in die Turbomaschine bzw. in das Turbotriebwerk, so dass Enden (17, 12) der Leitungen (16, 11) im Bereich der zu reinigenden Fläche liegen,
- Absaugen der zuvor abgelösten Partikel mit Hilfe der Saugleitung (16).

7. Werkzeug nach einem der Ansprüche 1, 2, 4 oder 5, **dadurch gekennzeichnet, dass** der Plasmabrenner ein Kaltplasmabrenner ist.

## Claims

1. Tooling for removing sand from a turbine engine, such as an airplane turbojet, the tooling comprising a single endoscopic display device (5) comprising a display means (10) and a duct (11) having light guide and image transmission means mounted therein, a suction device (9) having suction means (15) connected to a suction duct (16) fastened to the duct (11) of the above-mentioned display device (5), and a plasma jet generator device (6) comprising a plasma torch connected to gas supply and electricity power supply means (13) suitable for operating said plasma torch, said plasma torch being fastened to the duct (11) of the above-mentioned display device (5).

2. Tooling according to claim 1, **characterized in that** the suction device (9) and the plasma jet generator device (6) are coupled to a single display device (5) so as to form a single set of tooling.

3. A method of removing sand from a turbine engine with the help of tooling according to claim 2, the method being **characterized in that** it comprises the steps consisting in:
· inserting the plasma torch, the duct (16) of the suction means (9), and the duct (11) of the display device (5) simultaneously into the turbine engine in such a manner that the torch and the free ends (17, 12) of said ducts (16, 11) are locating in front of a surface to be cleaned;
· using the plasma torch to detach a layer of particles, e.g. such as a layer of sand, from the surface to be cleaned;
· using the suction duct (16) to suck up the previously detached particles.

4. Tooling for removing sand from a turbine engine, such as an airplane turbojet, the tooling comprising endoscopic display devices (5, 8) each comprising a display means (10) and a duct (11) having light guide and image transmission means mounted therein, a suction device (9) having suction means (15) connected to a suction duct (16) fastened to the duct (11) of a second (8) display devices (5, 8), and a plasma jet generator device (6) comprising a plasma torch connected to gas supply and electricity power supply means (13) suitable for operating said plasma torch, said plasma torch being fastened to the duct (11) of a first (5) of the above mentioned display devices (5, 8).

5. Tooling according to claim 4, **characterized in that** it comprises a first set of tooling (4) constituted by a first display device (5) coupled to a plasma jet generator device (6), and a second set of tooling (7) constituted by a second display device (8) coupled to a suction device (9).

6. A method of removing sand from a turbine engine with the help of tooling according to claim 5, the method being **characterized in that** it comprises the steps consisting in:
· inserting both the plasma torch and the duct (11) of the first display means (5) simultaneously in the turbine engine in such a manner that the torch and the free end (12) of said duct (11) are located in front of a surface to be cleaned;
· using the plasma torch to detach a layer of particles, e.g. such as a layer of sand, from the surface to be cleaned;
· inserting both the suction duct (16) and the duct (11) of the second display means (8) simultaneously into the turbine engine in such a manner that the ends (17, 12) of said ducts (16, 11) are situated facing the surface to be cleaned;
· using the suction duct (16) to suck up the previously detached particles.

7. Tooling according to any one of claims 1, 2 4 or 5, **characterized in that** the plasma torch is a cold plasma torch.
